# FASCICULE DE BREVET EUROPEEN

(11) **EP 2 334 542 B1**
(45) Date de publication et mention de la délivrance du brevet: **05.12.2012**
(21) Numéro de dépôt: 09783919.5
(22) Date de dépôt: 09.10.2009
(51) Int. Cl.: B62K 19/34

(54) **SUSPENSION ARRIERE D ' UN VEHICULE A DEUX ROUES**
HINTERRADAUFHÄNGUNG FÜR EIN ZWEIRÄDRIGES FAHRZEUG
REAR SUSPENSION FOR A TWO-WHEEL VEHICLE

(30) Priorité: 09.10.2008 FR 0856838
(43) Date de publication de la demande: 22.06.2011
(73) Titulaire: Cycles Lapierre, 21000 Dijon (FR)
(72) Inventeur: PLANTET, Pierre-Geoffroy, F-14250 Audrieu (FR)
(74) Mandataire: Dupuis, François
(86) Numéro de dépôt international: PCT/EP2009/063225
(87) Numéro de publication internationale: WO 2010/040848

(56) Documents cités:
- EP-A- 1 234 760
- WO-A-99/65760
- DE-A1- 19 959 795

## Description

### DOMAINE DE L'INVENTION

La présente invention concerne une suspension arrière d'un véhicule telle qu'une bicyclette, une moto ou analogue, du type comportant un châssis, un bras oscillant solidaire du cadre et un amortisseur dont les extrémités sont solidaires respectivement du cadre et du bras oscillant, ladite suspension procurant un effet dit anti-pompage.

### ARRIERE-PLAN DE L'INVENTION

On connaît bien des vélos tout terrain dits VTT dont la suspension arrière est constituée d'un bras oscillant articulé au niveau de la partie inférieure du tube de selle et coopérant avec un amortisseur. Ledit bras oscillant pivote autour d'un axe fixe parallèle à l'axe du pignon menant qui est porté par le boitier de pédalier positionné à l'extrémité inférieure du cadre, c'est-à-dire à l'intersection du tube oblique et du tube de selle de ce dernier.

Par ailleurs, les extrémités de l'amortisseur sont solidaires du bras oscillant et respectivement du tube horizontal reliant le tube de selle à la fourche du vélo ou d'un tube intermédiaire s'étendant globalement du boitier de pédalier au tube horizontal, ledit tube de selle étant interrompu pour laisser le passage à l'amortisseur.

Ce type de suspension arrière provoque sous l'action d'un coup de pédale énergique tel qu'un coup de pédale pour relancer le vélo ou lorsque le cycliste adopte la position dite en danseuse debout sur les pédales, un effet dit de pompage qui se traduit par un enfoncement cyclique de la suspension même sur un sol parfaitement nivelé.

Ce type de suspension arrière présente donc l'inconvénient de dissiper une partie du couple moteur fourni par le cycliste dans l'amortisseur au lieu de participer à la motricité du vélo.

Afin de remédier à cet inconvénient, on a déjà imaginé un grand nombre de suspensions arrière. C'est le cas notamment de la demande de brevet américain US2002/0109332, des brevets US 5,899,480, US 5,678,837, US 5,509,679 ou des demandes de brevet européen EP1363831, EP1781530 ou EP1026073 notamment.

Ces suspensions arrière sont généralement constituées d'un bras oscillant articulé au tube de selle et/ou au tube oblique du cadre au moyen de deux biellettes ou similaires, ledit bras oscillant ou au moins l'une des biellettes coopérant avec un amortisseur. Ledit bras oscillant pivote ainsi autour d'un point de pivot virtuel mobile, également appelé centre instantané de rotation, qui correspond à l'intersection des droites passant par les axes respectifs des biellettes ou à un point situé entre les axes des biellettes si ces dernières s'étendent parallèlement l'une par rapport à l'autre. C'est le cas de la demande de brevet américain US2002/0109332, par exemple, qui décrit une telle suspension arrière de vélo.

Certaines de ces suspensions présentent l'inconvénient de procurer un effet dit de « kick back » et/ou un effet de pompage qui se traduit par un enfoncement cyclique de la suspension même sur un sol parfaitement nivelé dissipant ainsi une partie du couple moteur fourni par le cycliste dans l'amortisseur au lieu de participer à la motricité du vélo.

De plus, la position et l'orientation des biellettes nécessitent d'adapter la géométrie du cadre de sorte que la position de conduite et/ou la rigidité du cadre et/ou la maniabilité en sont affectées.

### BREVE DESCRIPTION DE L'INVENTION

L'un des buts de l'invention est donc de remédier à tous ces inconvénients en proposant une suspension arrière de conception simple, peu onéreuse et ne provoquant ni de pompage, ni de phénomène de « kick-back ».

WO-A-99/65760 divulgue une suspension selon le préambule de la révendication 1.

A cet effet, et conformément à l'invention, il est proposé une suspension arrière d'un véhicule tel qu'une bicyclette, une moto ou analogue du type comportant un châssis dit cadre, un bras oscillant articulé au cadre portant l'axe du moyeu d'une roue motrice et un amortisseur dont les extrémités sont solidaires respectivement du châssis et du bras oscillant, le couple moteur étant transmis à la roue motrice par des moyens de transmission, et un boitier de pédalier articulé au cadre par un premier moyen d'articulation coopérant avec un second moyen d'articulation articulé au bras oscillant ; ladite suspension est remarquable en ce que l'axe de rotation entre le premier et le second moyen d'articulation, l'axe de rotation entre le second moyen d'articulation et le bras oscillant par rapport au cadre, et l'axe de rotation du bras oscillant par rapport au cadre sont sensiblement alignés lorsque la bicyclette est en position d'équilibre statique (SAG).

De préférence, lesdits axes sont globalement alignés sur une droite sensiblement horizontale.

Les premier et second moyens d'articulation consistent respectivement en une première et seconde biellette.

Par ailleurs, la première biellette est montée libre en rotation dans sa partie médiane autour d'un axe solidaire du cadre, le boitier de pédalier étant solidaire d'une extrémité de la première biellette et l'extrémité opposée de ladite première biellette étant articulée autour d'un axe de rotation à l'une des extrémités de la seconde biellette, l'extrémité opposée de la seconde biellette étant articulée autour d'un axe solidaire du bras oscillant.

De préférence, la première biellette s'étend sensiblement verticalement et la seconde biellette s'étend sensiblement horizontalement en position d'équilibre statique.

Par ailleurs, l'axe du boitier de pédalier et l'axe de rotation de la première biellette par rapport au cadre sont avantageusement positionnés sur une droite verticale lorsque la bicyclette est en position d'équilibre statique afin de procurer la reprise des effets inertiels du corps sur le cadre.

De plus, la distance séparant l'axe du moyeu de la roue arrière à l'axe de rotation du bras oscillant par rapport au cadre est sensiblement égale à 4 fois la différence de hauteur entre l'axe du moyeu de la roue arrière et l'axe de rotation du bras oscillant par rapport au cadre.

### BREVE DESCRIPTION DES DESSINS

D'autres avantages et caractéristiques ressortiront mieux de la description qui va suivre de plusieurs variantes d'exécution, données à titre d'exemples non limitatifs, de la suspension arrière conforme à l'invention, à partir des dessins annexés sur lesquels :
- la figure 1 est une vue de côté d'une bicyclette équipée d'une suspension arrière conforme à l'invention,
- la figure 2 est une représentation schématique de la bicyclette équipée de la suspension conforme à l'invention représentée sur la figure 1, seuls le cadre et le bras oscillant arrière étant représentés,
- la figure 3 est une représentation graphique de la courbe du couple appliqué sur le bras oscillant en fonction du débattement de la roue arrière de la suspension conforme à l'invention,
- la figure 4 est une représentation graphique comparative de la longueur de chaîne en fonction de l'enfoncement d'une suspension conforme à l'invention et d'une suspension mono-pivot de l'art antérieur,
- la figure 5 est une représentation graphique du pourcentage d'augmentation de la longueur de la ligne de chaîne en fonction de l'enfoncement d'une suspension conforme à l'invention et d'une suspension mono-pivot de l'art antérieur,
- la figure 6 est une représentation schématique de la bicyclette équipée d'une variante d'exécution de la suspension conforme à l'invention, seuls le cadre et le bras oscillant arrière étant représentés,
- la figure 7 est une représentation schématique de la bicyclette équipée d'une première variante d'exécution de la suspension conforme à l'invention, seuls le cadre et le bras oscillant arrière étant représentés,
- la figure 8 est une représentation schématique de la bicyclette équipée d'une seconde variante d'exécution de la suspension conforme à l'invention, seuls le cadre et le bras oscillant arrière étant représentés,
- la figure 9 est une représentation schématique de la bicyclette équipée d'une troisième variante d'exécution de la suspension conforme à l'invention, seuls le cadre et le bras oscillant arrière étant représentés,
- la figure 10 est une représentation schématique de la bicyclette équipée d'une quatrième variante d'exécution de la suspension conforme à l'invention, seuls le cadre et le bras oscillant arrière étant représentés,
- la figure 11 est une représentation schématique de la bicyclette équipée d'une dernière variante d'exécution de la suspension conforme à l'invention, seuls le cadre et le bras oscillant arrière étant représentés.

### DESCRIPTION DETAILLEE DE L'INVENTION

On décrira ci-après à titre d'exemple non limitatif une suspension arrière d'une bicyclette de type vélo tout terrain (VTT). Néanmoins, la suspension arrière suivant l'invention pourrait être adaptée à tout autre véhicule sans pour autant sortir du cadre de l'invention.

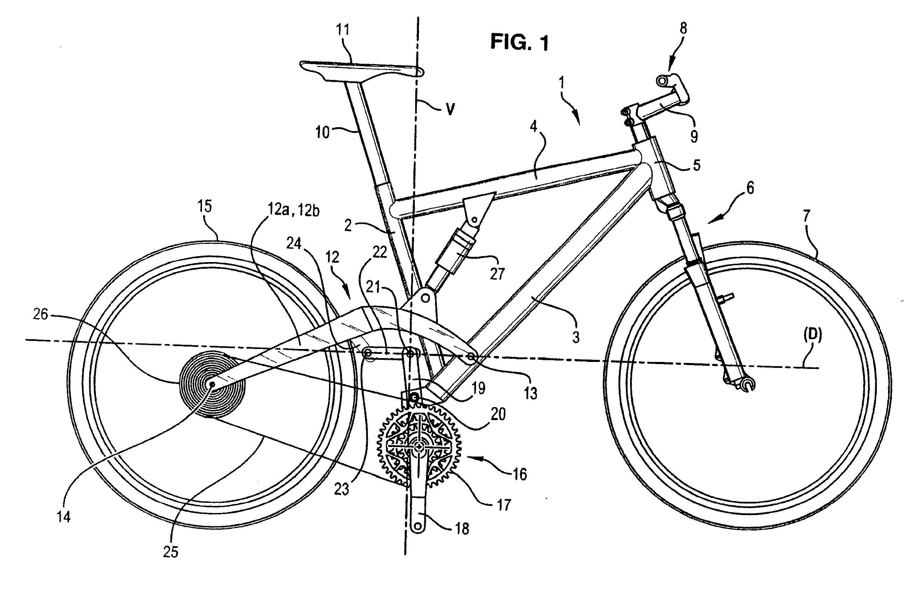

En référence à la figure 1, le VTT qui est représenté en position d'équilibre statique comprend un châssis 1 dit cadre triangulé constitué d'un tube de selle 2 globalement vertical, d'un tube oblique 3 assemblé par soudage à l'extrémité inférieure du tube de selle 2 et d'un tube horizontal 4 dont les extrémités sont assemblées par soudage à l'extrémité supérieure du tube de selle 2 et respectivement à un tube de fourche 5 globalement vertical, le tube oblique 3 étant, par ailleurs, solidarisé audit tube de fourche 5 également par soudage. Ce tube de fourche 5 reçoit une fourche 6 du type télescopique portant à son extrémité inférieure l'axe du moyeu de la roue avant 7 du VTT. Un guidon 8 est de manière classique solidarisé à l'extrémité distale d'une potence 9 solidaire de l'extrémité supérieure de la fourche 6 pour assurer la direction du VTT. Le tube de selle 2 est apte à recevoir une tige de selle 10 comprenant à son extrémité supérieure une selle 11 sur laquelle prend position le cycliste.

On entend par position d'équilibre statique l'enfoncement dit «SAG » initial des suspensions avant et/ou arrière en charge, c'est-à-dire lorsqu'un cycliste de poids moyen prend position sur le vélo sans prendre appui sur le sol et sans bouger.

Ledit VTT comprend, par ailleurs, un bras oscillant 12 mono-bras constitué de deux ensembles curvilignes 12a, 12b s'étendant de part et d'autre du plan médian du cadre 1, la concavité des ensembles curvilignes 12a, 12b étant orientée vers le sol. Lesdits ensembles 12a, 12b sont reliés par une ou plusieurs entretoises non représentées sur la figure 1. L'extrémité proximale du bras oscillant 12 est articulée au cadre 1 autour d'un axe de rotation 13 positionné à l'extrémité inférieure du tube oblique 3, c'est-à-dire à proximité de l'intersection du tube oblique 3 et dudit tube de selle 2. L'extrémité distale dudit bras oscillant 12 porte l'axe 14 du moyeu de la roue arrière 15 motrice.

Par ailleurs, ledit VTT comporte un boitier de pédalier 16 portant de manière classique l'axe des pignons menant 17 communément appelés plateaux dont les axes de rotation sont coaxiaux. Des pédales 18 sont solidaires de l'axe des pignons menant 17 de part et d'autre du cadre 1 du VTT. Ledit boitier de pédalier 16 est solidaire de l'extrémité inférieure d'une première biellette 19 s'étendant globalement verticalement. On entend par sensiblement verticalement une position de la biellette 19 formant un angle compris entre -30 et +30° avec la verticale. Cette première biellette 19 est sensiblement rectiligne et elle est articulée dans sa partie médiane autour d'un axe 20 solidaire du cadre 1, et plus précisément autour d'un axe 20 solidaire de l'extrémité inférieure du tube oblique 3. L'extrémité opposée de ladite première biellette 19 est articulée autour d'un axe de rotation 21 à l'une des extrémités d'une seconde biellette 22, l'extrémité opposée de ladite seconde biellette 22 étant articulée autour d'un axe 23 solidaire d'une pate 24 soudée dans la partie médiane du bras oscillant 12, sous ce dernier. Ladite seconde biellette 22 s'étend sensiblement horizontalement en position d'équilibre statique. On entend par sensiblement horizontalement une position de la biellette 22 formant un angle compris entre -30 et +30° avec l'horizontale.

Il est bien évident que les biellettes 19 et/ou 22 pourront être substitués par tous moyens d'articulation équivalents bien connus de l'Homme du métier tels que des excentriques ou similaires.

On observera que l'axe du boitier de pédalier 16 et l'axe de rotation 20 de la première biellette 19 par rapport au cadre 1 sont positionnés sur une droite verticale (V) lorsque la bicyclette est en position d'équilibre statique afin de procurer la reprise des effets inertiels du corps du cycliste sur le cadre 1.

De manière classique, ladite roue arrière 15 est entraînée en rotation par une chaîne de transmission 25 s'étendant entre le pignon menant 17 du boitier de pédalier 16 et un pignon mené 26 porté par l'axe 14 du moyeu de la roue arrière 15 motrice, lorsque le cycliste pédale.

On notera également que l'axe de rotation 21 entre la première 19 et la seconde 22 biellette, l'axe de rotation 13 du bras oscillant 12 par rapport au cadre 1 et l'axe de rotation 23 entre la seconde biellette 22 et le bras oscillant 12 sont sensiblement alignés lorsque la bicyclette est en position d'équilibre statique (SAG). Dans cet exemple particulier de réalisation, lesdits axes sont globalement alignés sur une droite (D) sensiblement horizontale.

De plus, la distance séparant l'axe 14 du moyeu de la roue arrière 15 à l'axe de rotation 13 du bras oscillant 12 par rapport au cadre 1 est sensiblement égale à 4 fois la différence de hauteur entre l'axe 14 du moyeu de la roue arrière 15 et l'axe deb rotation 13 du bras oscillant 12 par rapport au cadre 1.

Par ailleurs, le VTT comporte un amortisseur 27 dont les extrémités sont respectivement solidaires du tube horizontal 4 du cadre 1 et du bras oscillant 12.

On expliquera maintenant le fonctionnement de la suspension conforme à l'invention en référence aux figures 1 à 3.

Lorsqu'un cycliste prend position sur le VTT muni de la suspension conforme à l'invention et pédale sur un sol plat, l'axe 14 du moyeu de la roue arrière se situe au SAG et le couple exercé par les forces extérieures au niveau de l'axe de rotation 13 du bras oscillant 12 par rapport au cadre 1 est nul évitant ainsi tout enfoncement de la suspension, c'est-à-dire évitant toute apparition d'un phénomène de pompage.

Lesdites forces extérieures consistent dans les forces induites dans les biellettes 19 et 22 et dans la roue arrière 15, les efforts du cadre 1 sur le bras oscillant procurant un couple nul au niveau de l'axe de rotation 13 du bras oscillant par rapport au cadre en raison de la liaison pivot qui lie ces deux pièces.

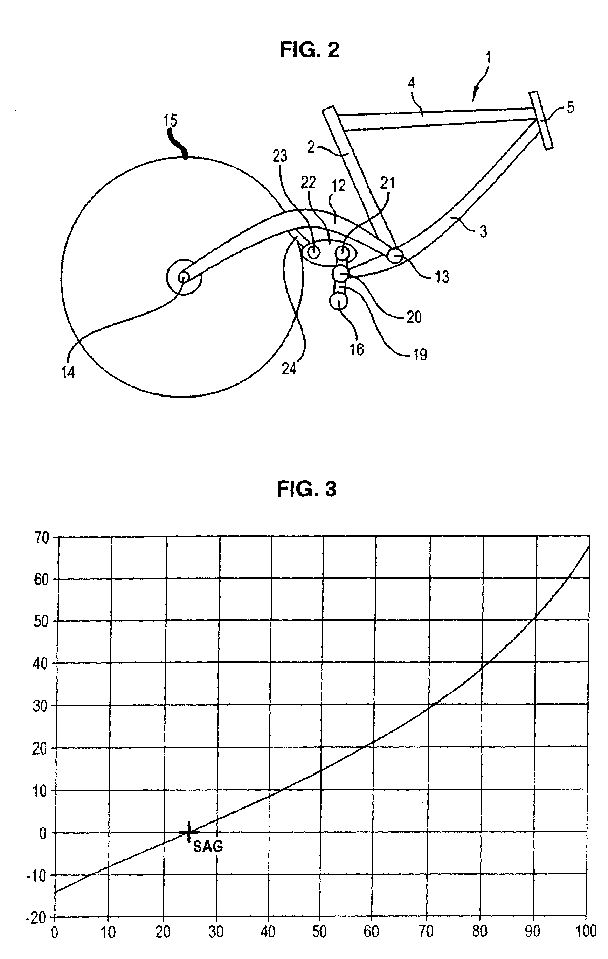

Lorsque la roue arrière 15 rencontre un obstacle, en référence à la figure 3, la courbe montre que, pour un enfoncement de la suspension supérieur au « SAG », le couple est positif alors que le couple est négatif quand la suspension se détend de sorte que si le bras oscillant 12 n'est pas dans sa position au «SAG », il y sera ramené par les efforts de pédalage.

De plus, on observera que, lorsque la roue arrière rencontre un obstacle, c'est-à-dire lorsque l'axe de la roue se situe au dessus du « SAG », le boitier de pédalier se déplace légèrement vers la roue avant ce qui procure une très légère augmentation de la tension de chaîne qui n'est pas perceptible par le cycliste. Ce dernier n'a donc pas d'impression de « kick-back », contrairement aux dispositifs de l'art antérieur.

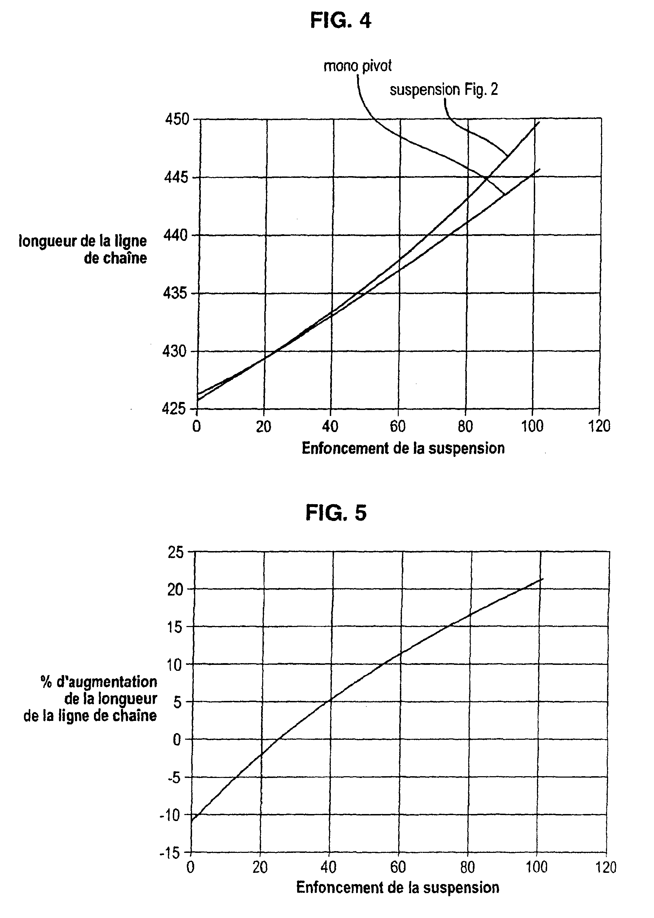

En effet, en référence à la figure 4, on a comparé la suspension suivant l'invention et une suspension classique de type mono-pivot en termes d'évolution de la longueur de la ligne de chaîne en fonction de l'enfoncement. On prendra comme suspension mono-pivot, une configuration qui a le point de pivot du bras oscillant par rapport au triangle avant au même endroit que la suspension conforme à l'invention.

Par contre, le boitier de pédalier ne bouge pas par rapport au triangle avant, c'est-à-dire par rapport au cadre 1 et il est pris au même endroit que celui de la suspension conforme à l'invention lorsqu'elle est au SAG. De plus, l'allongement de la longueur de la ligne de chaîne a été calculé avec les dimensions suivantes : longueur du bras oscillant 12 d'environ 540mm, longueur de la première biellette 19 d'environ 108mm, longueur de la seconde biellette 22 d'environ 105mm, et une distance entre l'axe de rotation 13 du bras oscillant 12 par rapport au cadre 1 et l'axe de rotation 23 de la seconde biellette 22 par rapport au bras oscillant 12 d'environ 200mm.

Etant donné que le boitier de pédalier 16 de la suspension suivant l'invention avance légèrement vers l'avant lorsque la suspension s'enfonce, la longueur de la ligne de chaîne augmente plus que lors de l'enfoncement de la suspension classique de type mono-pivot.

En référence à la figure 5 qui représente l'augmentation de la longueur de chaîne en pourcentage de la suspension conforme à l'invention par rapport à une suspension mono-pivot en fonction de l'enfoncement, il apparaît que sur les deux premiers centimètres d'enfoncement de la suspension, cette plage d'enfoncement correspondant à la plage d'enfoncement dans laquelle un phénomène de pompage apparaît dans les suspensions de l'art antérieur, l'augmentation de la longueur de chaîne n'est que d'environ 7%. Cette faible différence n'est pas perceptible par un cycliste.

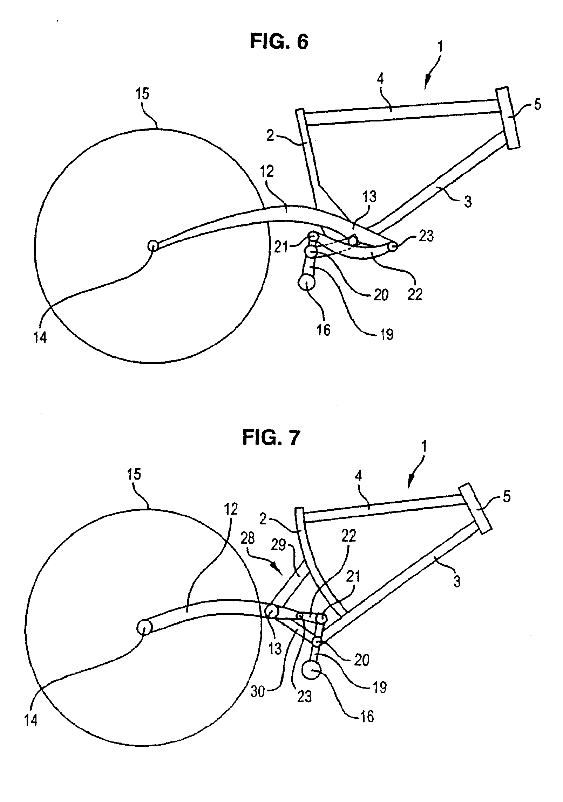

Selon une première variante d'exécution de la suspension arrière conforme à l'invention, en référence à la figure 6, cette dernière comporte de la même manière que précédemment un châssis 1 dit cadre triangulé constitué d'un tube de selle 2, d'un tube oblique 3 et d'un tube horizontal 4, un bras oscillant 12 mono-bras articulé au cadre 1 autour d'un axe de rotation 13 et un boitier de pédalier 16 solidaire d'une première biellette 19 articulée autour d'un axe 20 solidaire du cadre 1, ladite première biellette 19 étant articulée autour d'un axe de rotation 21 à une seconde biellette 22 articulée autour d'un axe 23 solidaire du bras oscillant 12.

Cette suspension se distingue de la précédente par le fait que l'axe de rotation 23 de la seconde biellette 22 est positionné en avant de l'axe de rotation 13 du bras oscillant 12 par rapport au cadre 1. Dans cet exemple de réalisation la seconde biellette 22 s'étend horizontalement et présente une forme légèrement curviligne.

Selon une seconde variante d'exécution de la suspension arrière conforme à l'invention, en référence à la figure 7, cette dernière comporte de la même manière que précédemment un châssis 1 dit cadre triangulé constitué d'un tube de selle 2, d'un tube oblique 3 et d'un tube horizontal 4, un bras oscillant 12 mono-bras articulé au cadre 1 autour d'un axe de rotation 13 et un boitier de pédalier 16 solidaire d'une première biellette 19 articulée autour d'un axe 20 solidaire du cadre 1, ladite première biellette 19 étant articulée autour d'un axe de rotation 21 à une seconde biellette 22 articulée autour d'un axe 23 solidaire du bras oscillant 12.

Cette suspension se distingue de la suspension représentée sur les figures 1 et 2 par le fait que, d'une part, l'axe de rotation 13 du bras oscillant 12 est positionné en arrière de l'axe de rotation 20 de la première biellette 19 par rapport au cadre 1 et, d'autre part, l'axe de rotation 23 de la seconde biellette 22 est positionné en avant de l'axe de rotation 13 du bras oscillant par rapport au cadre 1. Afin de réaliser cette architecture particulière de la suspension arrière suivant l'invention, le cadre 1 comporte dans sa partie arrière un second triangle 28 constitué de segments de tubes 29 et 30.

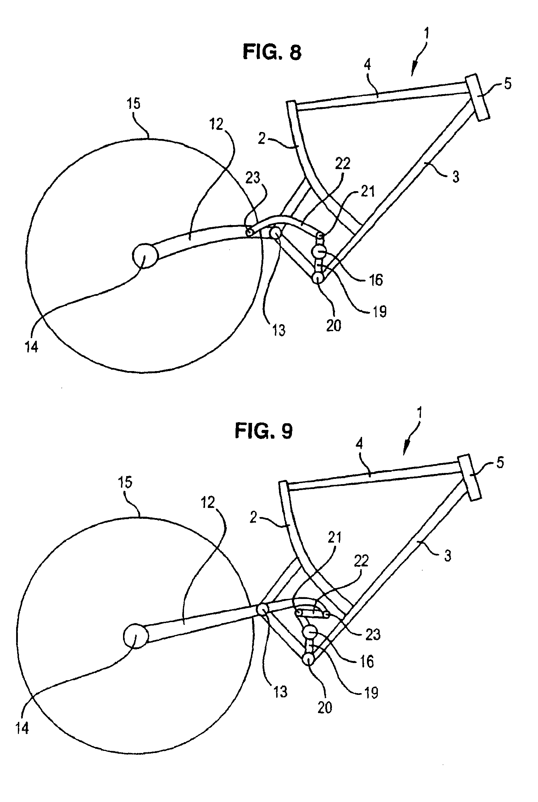

Selon une troisième variante d'exécution de la suspension arrière conforme à l'invention, en référence à la figure 8, cette dernière comporte de la même manière que précédemment un châssis 1 dit cadre triangulé constitué d'un tube de selle 2, d'un tube oblique 3 et d'un tube horizontal 4, un bras oscillant 12 mono-bras articulé au cadre 1 autour d'un axe de rotation 13 et un boitier de pédalier 16 solidaire d'une première biellette 19 articulée autour d'un axe 20 solidaire du cadre 1, ladite première biellette 19 étant articulée autour d'un axe de rotation 21 à une seconde biellette 22 articulée autour d'un axe 23 solidaire du bras oscillant 12.

Cette suspension se distingue de la suspension précédente représentée sur la figure 7 par le fait que, d'une part, le boitier de pédalier 16 est positionné au dessus de l'axe de rotation 20 de la première biellette par rapport au cadre 1 et, d'autre part, que l'axe de rotation 23 de la seconde biellette 22 est positionné en arrière de l'axe de rotation 13 du bras oscillant par rapport au cadre 1.

Selon une quatrième variante d'exécution de la suspension arrière conforme à l'invention, en référence à la figure 9, cette dernière comporte de la même manière que précédemment un châssis 1 dit cadre triangulé constitué d'un tube de selle 2, d'un tube oblique 3 et d'un tube horizontal 4, un bras oscillant 12 mono-bras articulé au cadre 1 autour d'un axe de rotation 13 et un boitier de pédalier 16 solidaire d'une première biellette 19 articulée autour d'un axe 20 solidaire du cadre 1, ladite première biellette 19 étant articulée autour d'un axe de rotation 21 à une seconde biellette 22 articulée autour d'un axe 23 solidaire du bras oscillant 12.

Cette suspension se distingue de la suspension précédente représentée sur la figure 8 par le fait que l'axe de rotation 23 de la seconde biellette 22 est positionné en avant de l'axe de rotation 13 du bras oscillant par rapport au cadre 1 et en avant du boitier de pédalier 16.

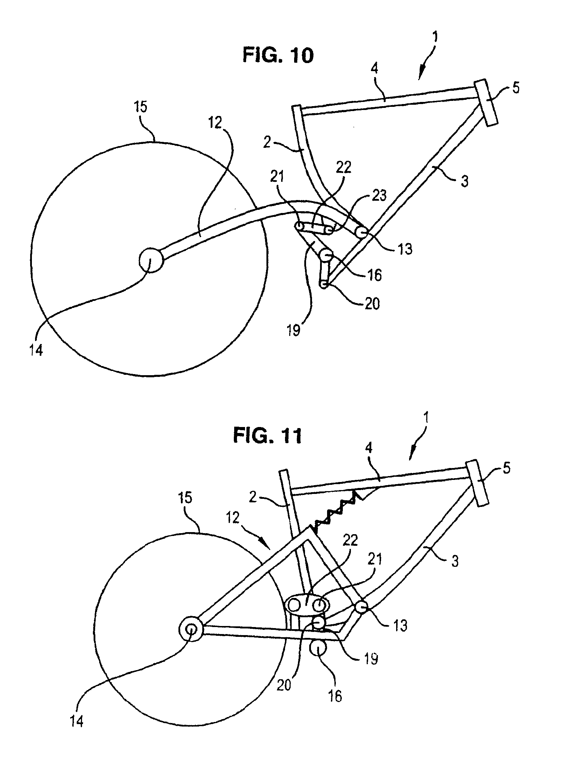

Selon une cinquième variante d'exécution de la suspension arrière conforme à l'invention, en référence à la figure 10, cette dernière comporte de la même manière que précédemment un châssis 1 dit cadre triangulé constitué d'un tube de selle 2, d'un tube oblique 3 et d'un tube horizontal 4, un bras oscillant 12 mono-bras articulé au cadre 1 autour d'un axe de rotation 13 et un boitier de pédalier 16 solidaire d'une première biellette 19 articulée autour d'un axe 20 solidaire du cadre 1, ladite première biellette 19 étant articulée autour d'un axe de rotation 21 à une seconde biellette 22 articulée autour d'un axe 23 solidaire du bras oscillant 12.

Cette suspension se distingue de la suspension représentée sur les figures 1 et 2 par le fait que, d'une part, le boitier de pédalier 16 est positionné au dessus de l'axe de rotation 20 de la première biellette par rapport au cadre 1 et, d'autre part, que l'axe de rotation 23 de la seconde biellette 22 est positionné en avant de l'axe de rotation 21 de la première biellette 19 par rapport à la seconde biellette 22.

Selon une dernière variante d'exécution de la suspension arrière conforme à l'invention, en référence à la figure 11, cette dernière comporte de la même manière que précédemment un châssis 1 dit cadre triangulé constitué d'un tube de selle 2, d'un tube oblique 3 et d'un tube horizontal 4, un bras oscillant 12 mono-bras articulé au cadre 1 autour d'un axe de rotation 13 et un boitier de pédalier 16 solidaire d'une première biellette 19 articulée autour d'un axe 20 solidaire du cadre 1, ladite première biellette 19 étant articulée autour d'un axe de rotation 21 à une seconde biellette 22 articulée autour d'un axe 23 solidaire du bras oscillant 12.

Cette suspension se distingue de la suspension représentée sur les figures 1 et 2 par le fait que le bras oscillant mono-bras 12 a été substitué par un bras oscillant 12 triangulaire.

Il est bien évident que le cadre 1 pourra présenter une forme quelconque tel qu'un cadre triangulaire ou un cadre poutre par exemple et que le bras oscillant pourra également présenter une forme quelconque tel qu'un mono-bras ou un bras triangulaire par exemple sans pour autant sortir du cadre de l'invention.

De plus, il est bien évident que l'Homme du métier pourra aisément adapter les dimensions des tubes du cadre 1, du bras oscillant 12 et des biellettes 19 et 22 en fonction notamment de la taille du cycliste et de l'utilisation prévue de la bicyclette.

Enfin, il va de soi que les exemples que l'on vient de donner ne sont que des illustrations particulières en aucun cas limitatives quant aux domaines d'application de l'invention.

## Revendications

1. Suspension arrière d'un véhicule tel qu'une bicyclette, une moto ou analogue du type comportant un châssis dit cadre (1), un bras oscillant (12) articulé au cadre (1) portant l'axe (14) du moyeu d'une roue motrice (15) un amortisseur (27) dont les extrémités sont solidaires respectivement du cadre (1) et du bras oscillant (12), le couple moteur étant transmis à la roue motrice par des moyens de transmission, et un boitier de pédalier (16) articulé au cadre (1) par un premier moyen d'articulation (19) coopérant avec un second moyen d'articulation (22) articulé au bras oscillant (12), **caractérisée en ce que** l'axe de rotation (21) entre le premier (19) et le second (22) moyen d'articulation, l'axe de rotation (23) entre le second moyen d'articulation (22) et le bras oscillant (12), et l'axe de rotation (13) du bras oscillant (12) par rapport au cadre (1) sont sensiblement alignés lorsque la bicyclette est en position d'équilibre statique dit SAG.

2. Suspension suivant la revendication 1, **caractérisée en ce que** lesdits axes (21,23 et 13) sont globalement alignés sur une droite sensiblement horizontale.

3. Suspension suivant l'une quelconque des revendications 1 ou 2, **caractérisée en ce que** les premier (19) et second (22) moyens d'articulation consistent respectivement en une première et seconde biellette (19,22).

4. Suspension suivant la revendication 3, **caractérisée en ce que** la première biellette (19) est montée libre en rotation dans sa partie médiane autour d'un axe (20) solidaire du cadre (1), le boitier de pédalier (16) étant solidaire d'une extrémité de la première biellette (19) et l'extrémité opposée de ladite première biellette (19) étant articulée autour d'un axe de rotation (21) à l'une des extrémités de la seconde biellette (22), l'extrémité opposée de la seconde biellette (22) étant articulée autour d'un axe (23) solidaire du bras oscillant (12).

5. Suspension suivant l'une quelconque des revendications 3 ou 4, **caractérisée en ce que** la première biellette (19) s'étend sensiblement verticalement en position d'équilibre statique.

6. Suspension suivant l'une quelconque des revendications 3 à 5, **caractérisée en ce que** la seconde biellette (22) s'étend sensiblement horizontalement en position d'équilibre statique.

7. Suspension suivant l'une quelconque des revendications 3 à 6, **caractérisée en ce que** l'axe du boitier de pédalier (16) et l'axe de rotation (20) de la première biellette (19) par rapport au cadre (1) sont positionnés sur une droite verticale lorsque la bicyclette est en position d'équilibre statique afin de procurer la reprise des effets inertiels du corps sur le cadre (1).

8. Suspension suivant l'une quelconque des revendications 1 à 7, **caractérisée en ce que** la distance séparant l'axe (14) du moyeu de la roue arrière (15) à l'axe de rotation (13) du bras oscillant (12) par rapport au cadre (1) est sensiblement égale à 4 fois la différence de hauteur entre l'axe (14) du moyeu de la roue arrière (15) et l'axe de rotation (13) du bras oscillant (12) par rapport au cadre (1).

## Claims

1. Rear suspension for a vehicle such as a bicycle, a motorcycle or the like, which comprises a chassis referred to as a frame (1), a swinging arm (12) hinged to the frame (1) and supporting the axle (14) of the hub of a driving wheel (15), and a shock absorber (27) having ends rigidly connected to the frame (1) and the swinging arm (12) respectively, the driving torque being transmitted to the driving wheel by a transmission means, and a bottom bracket (16) hinged to the frame (1) by a first hinge means (19) interacting with a second hinge means (22) hinged to the swinging arm (12), **characterized in that** the rotation axis (21) between the first hinge means (19) and the second hinge means (22), the rotation axis (23) between the second hinge means (22) and the swinging arm (12), and the rotation axis (13) of the swinging arm (12) relative to the frame (1) are substantially aligned when the bicycle is in the so-called SAG static balance position.

2. Suspension as claimed in claim 1, **characterized in that** said axes (21, 23 and 13) are on the whole aligned in a substantially horizontal straight line.

3. Suspension as claimed in any one of claims 1 or 2, **characterized in that** the first hinge means (19) and the second hinge means (22) comprise a first and second rod (19, 22) respectively.

4. Suspension as claimed in claim 3, **characterized in that** the first rod (19) is freely rotatably mounted in the median portion thereof about an axle (20) rigidly connected to the frame (1), the bottom bracket (16) being rigidly connected to one end of the first rod (19) and the opposite end of said first rod (19) being hinged about an axle (21) at one of the ends of the second rod (22), the opposite end of the second rod (22) being hinged about an axle (23) rigidly connected to the swinging arm (12).

5. Suspension as claimed in any one of claims 3 or 4, **characterized in that** the first rod (19) extends substantially vertically in the static balance position.

6. Suspension as claimed in any one of claims 3 to 5, **characterized in that** the second rod (22) extends substantially horizontally in the static balance position.

7. Suspension as claimed in any one of claims 3 to 6, **characterized in that** the axis of the bottom bracket (16) and the rotation axis (20) of the first rod (19) relative to the frame (1) are positioned in a vertical straight line when the bicycle is in the static balance position in order to take up the inertial effects of the body on the frame (1).

8. Suspension as claimed in any one of claims 1 to 7, **characterized in that** the distance separating the axle (14) of the hub of the rear wheel (15) from the rotation axis (13) of the swinging arm (12) relative to the frame (1) is substantially equal to 4 times the difference in height between the axle (14) of the hub of the rear wheel (15) and the rotation axis (13) of the swinging arm (12) relative to the frame (1).

## Patentansprüche

1. Hintere Federung eines Fahrzeugs wie z. B. Fahrrad, Motorrad oder Ähnliches nach Art derjenigen mit einem als Rahmen (1) bezeichneten Gestell, einer am Rahmen (1) angelenkten Hinterradschwinge (12), die die Nabenachse (14) eines Antriebsrades (15) trägt, und einem Stoßdämpfer (27), dessen Enden jeweils mit dem Rahmen (1) und der Hinterradschwinge (12) fest verbunden sind, wobei das Antriebsmoment über Transmissionseinrichtungen auf das Antriebsrad übertragen wird, und einem Tretlagergehäuse (16), das durch eine erste Gelenkeinrichtung (19) am Rahmen (1) angelenkt ist, welche mit einer zweiten Gelenkeinrichtung (22), die an der Hinterradschwinge (12) angelenkt ist, zusammenwirkt, **dadurch gekennzeichnet, dass** die Drehachse (21) zwischen der ersten (19) und der zweiten (22) Gelenkeinrichtung, die Drehachse (23) zwischen der zweiten Gelenkeinrichtung (22) und der Hinterradschwinge (12), und die Drehachse (13) der Hinterradschwinge (12) am Rahmen (1) ziemlich genau auf einer Linie liegen, wenn sich das Fahrrad in der - als SAG bezeichneten - statischen Gleichgewichtsposition befindet.

2. Federung nach Anspruch 1, **dadurch gekennzeichnet, dass** die besagten Achsen (21,23 und 13) im Großen und Ganzen auf einer ziemlich genau horizontalen Geraden ausgerichtet sind.

3. Federung nach einem der Ansprüche 1 oder 2, **dadurch gekennzeichnet, dass** die erste (19) und die zweite (23) Gelenkeinrichtung jeweils aus einer ersten und zweiten Verbindungsstange (19,22) bestehen.

4. Federung nach Anspruch 3, **dadurch gekennzeichnet, dass** die erste Verbindungsstange (19) frei drehbar in ihrem mittleren Teil um eine mit dem Rahmen (1) fest verbundene Achse (20) herum angebracht ist, wobei das Tretlagergehäuse (16) mit einem Ende der ersten Verbindungsstange (19) fest verbunden ist, und das entgegengesetzte Ende der ersten Verbindungsstange (19) um eine Drehachse (21) herum an einem der Enden der zweiten Verbindungsstange (22) angelenkt ist, während das entgegengesetzte Ende der zweiten Verbindungsstange (22) um eine Achse (23) herum, die mit der Hinterradschwinge (12) fest verbunden ist, angelenkt ist.

5. Federung nach einem der Ansprüche 3 oder 4, **dadurch gekennzeichnet, dass** sich die erste Verbindungsstange (19) in statischer Gleichgewichtsposition ziemlich genau senkrecht erstreckt.

6. Federung nach einem der Ansprüche 3 - 5, **dadurch gekennzeichnet, dass** sich die zweite Verbindungsstange (22) in statischer Gleichgewichtsposition ziemlich genau waagrecht erstreckt.

7. Federung nach einem der Ansprüche 3 - 6, **dadurch gekennzeichnet, dass** die Achse des Tretlagergehäuses (16) und die Drehachse (20) der ersten Verbindungsstange (19) am Rahmen (1) auf einer vertikalen Geraden positioniert sind, wenn sich das Fahrrad in der statischen Gleichgewichtsposition befindet, um die Trägheitseffekte des Körpers am Rahmen (1) aufzunehmen.

8. Federung nach einem der Ansprüche 1 - 7, **dadurch gekennzeichnet, dass** der Abstand zwischen der Achse (14) der Nabe des Hinterrades (15) und der Drehachse (13) der Hinterradschwinge (12) am Rahmen (1) ziemlich genau viermal so groß ist wie der Höhenunterschied zwischen der Achse (14) der Nabe des Hinterrades (15) und der Drehachse (13) der Hinterradschwinge (12) am Rahmen (1).
